# EUROPEAN PATENT SPECIFICATION

(11) **EP 0 436 214 B1**
(45) Date of publication and mention of the grant of the patent: **21.02.1996**
(21) Application number: 90125456.5
(22) Date of filing: 24.12.1990
(51) Int. Cl.: B65B 39/00, F16K 31/08

(54) **Aseptic filling valve**
Aseptisches Füllventil
Valve de remplissage aseptique

(30) Priority: 26.12.1989 JP 334949/89
(43) Date of publication of application: 10.07.1991
(73) Proprietor: TOYO SEIKAN KAISHA LIMITED, Tokyo (JP)
(72) Inventor: Kaga, Yasuo, Yokohama-shi, Kanagawa-ken (JP); Watanabe, Michio, Yokohama-shi, Kanagawa-ken (JP); Iioka, Toshiaki, Chigasaki-shi, Kanagawa-ken (JP); Yamaguchi, Kanemichi, Yokohama-shi, Kanagawa-ken (JP); Nozawa, Eiichi, Kohoku-ku, Yokohama-shi, Kanagawa-ken (JP); Takamori, Shigeru, Setagaya-ku, Tokyo (JP)
(74) Representative: Vogeser, Werner, Dipl.-Ing.

(56) References cited:
- AU-B- 21 352
- FR-A- 1 523 792
- FR-A- 2 410 775
- GB-A- 2 103 391

## Description

The present invention relates to an aseptic filling valve for use in supplying and discharging a liquid in a filling apparatus for filling a liquid such as a drink or food or a medicine in a vessel. More particularly, the present invention relates to an aseptic filling valve which is opened and closed by utilizing magnetic coupling.

In the packaging field in the food industry and the pharmaceutical industry, in order to prevent deterioration and degradation of filled contents by the microbial contamination and improve the long-period preservability, an aseptic filling system is adopted. According to the aseptic filling system, a sterilized content is filled in a sterilized vessel in an aseptic environment. Special considerations should be taken for constituent elements of filling apparatus used for the aseptic filling system from the aseptic viewpoint so as to maintain the aseptic environment. Furthermore, prior to the filling operation, content-passing portions, mainly pipe systems, of the filling apparatus are sterilized by sterilizing means such as steam and hot water, and elements used for these portions of the filling apparatus should have a high resistance to such sterilization. In view of the foregoing, an aseptic valve is used as the filling valve attached to the filling apparatus for controlling the supply and discharge of a liquid content.

However, conventional aseptic valves are insufficient in various points, for example, practical maintenance of an aseptic state and prevention of deterioration of a fluid.

For example, in an aseptic valve proposed in Japanese Examined Utility Model Publication No.56-43188, steam or a sterilizing agent is caused to flow on a sliding portion of the valve to form an aseptic barrier. In this aseptic valve, microorganisms intruding from the exterior can be killed by the steam sterilization or by the action of the sterilizing agent, but it is apprehended that the fluid will be deteriorated by the high temperature possessed by stem or the fluid will be contaminated with the sterilizing agent.

In a valve of a closed structure proposed in Japanese Unexamined Utility Model Publication No.60-126775, a diaphragm is utilized for realizing an aseptic effect. Valves comprising a diaphragm or bellows are frequently used for pipelines in the food industry and the pharmaceutical industry. However, if the diaphragm or bellows is worn away or broken, the aseptic state cannot be maintained and there is a risk of occurrence of various problems. Since the bellows or diaphragm is uncertain in the durability, the bellows or diaphragm cannot be used at parts where opening and closing operations are frequently performed.

As another prior art technique, there can be mentioned an apparatus in accordance with the preamble of claim 1 in which the flow of a fluid is controlled by opening and closing by utilizing a magnetic flux, as disclosed in French Patent Application Publication No. 2,206,726.

In this apparatus, a valve seat is disposed within the apparatus proper and a closing device, which is driven by a magnetic flux from the exterior of the apparatus proper, is supported on the valve seat. In claim 2 of this French patent application publication, it is specified that the closing device is a ball lying of the valve seat disposed in the lower portion of the apparatus proper, which is moved by the gravity and the dynamic force of the flow of a fluid. In this case, the closing of the valve is performed without using the magnetic force of a magnet but by detaching a permanent magnet disposed outside the apparatus proper apart from the apparatus proper, the magnetic flux attracting the ball as the valve member is extinguished and the ball dropped on the valve seal by the gravity and the flow of a fluid blocks the flow of the fluid. When the valve is opened, the permanent magnet is brought close to the apparatus proper by the fluid or a mechanical jack and the ball is attracted by the magnetic flux of the permanent magnet to raise the ball from the valve seat. This method is advantageous over the above-mentioned method using an aseptic valve or the like in the quality-preserving property and durability. However, movable parts such as a permanent magnet, a rod and a jack are exposed to the outside and a sliding portion is present in the rod, and therefore, there is a risk of contamination of the aseptic atmosphere with a leaking jack-operating fluid and a lubricating oil and it cannot be said that the aseptic property is complete. Moreover, the method of closing the valve by the weight of spherical valve member is insufficient in the reliability and fine adjustment of the opening degree and the flow rate is difficult.

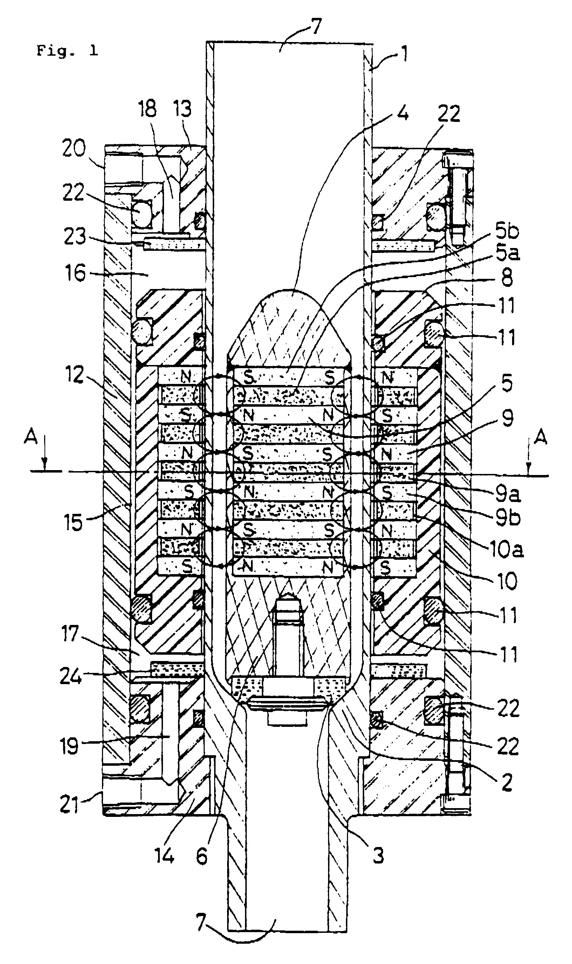

For example, FR-A-1 523 792 relates to a gas adjusting valve of an instantaneous water heater. The valve shown in Fig. 1 of the reference has such a structure that water flowing in from the downward side of the figure pushes up a float (16) provided inwardly of an inside of a tubular member (water chamber 2) to pull up a piston (18) (coupled magnetically to the float 16) provided within an outside gas chamber 7 whereby a passage of gas is opened. In this case, water flows in from the downward side of Fig. 1 and flows out from an upward side (6), and the gas comes in from the upward portion (9) of the gas chamber and flows out from a downward portion (10). The float (16) which is an inner moving member is on the driving side and the piston (18) which is an outer moving member is on the driven side.

An O-ring 20 or 21 provided on the side of the piston (18) functions as a valve. The seat 5 on the side of the float (16) deserves as a receiver of the float (16), and does not function to shut off a water flow passage. The O-rings 20 and 21 are secured to the tubular member 1, and do not move with the piston (18). The moment the piston (18) as an outer moving member moves upwardly O-rings 20 and 21 which lose the sealing function, and the gas can flow freely on the surrounding of the piston (18).

When water flows out, the float (16) as an inner moving member goes apart from the seat 5 by the flow of water, and water flows around the float (16). Namely, the driving source of the piston (18) as an outer moving member is the float (16) as an inner moving member. This float (16) is moved by the flow of water.

AU-B-416871 relates to a snap action valve for feeding a liquid carbon dioxide gas at a low temperature. A flexible bellows (16) is moved by an output signal from outside, and when a magnet (13) incident to it approaches a magnetic body (9), a magnetized magnetic body (9) attracts a magnetic body (10) in resistance to the force of a spring (12). A valve (11) is therefore opened to cause the liquid carbon dioxide gas to flow from an inlet (3) to an outlet (4). When the pressure signal is released, the bellows is elongated and the magnet (13) goes away from the magnetic body (9). Thus, the magnetic body (9) which loses a magnetic force cannot attract the magnetic body (10). The magnetic body (10) is returned by the spring (12), and the valve (11) is closed.

In this valve mechanism the flow passage can be opened and closed instantaneously by the snap action.

Furthermore, in regard to the aseptic property this valve mechanism is unsatisfactory.

When the pressure signal is released, the bellows (16) is elongated, and the magnet (13) goes farther from the magnetic body (9). The magnetic body (9) which has lost a magnetic force is unable to attract the magnetic body (10), and the valve (11) is closed by the spring (12). Accordingly, when the valve of D2 is applied to the aseptic utility, since the bellows (16) is positioned outside of the tubular member, there is a problem of durability. However, there is no problem of contamination by the breakage of the bellows (16). Since a closing operation is carried out by means of the spring, there is certainty. However, since two magnetic bodies and springs are positioned inside the tubular member which is a flow passage of a fluid, its structure becomes complex. Since these members exist in a space which must be kept germ-free, a problem arises at the time of cleaning and killing germs. Especially, since these members exist in a portion deviating from the flow passage of a liquid, an ordinary treatment which is carried out by flowing a cleaning agent or a germicide results in insufficient sterilization. This means that it is extremely difficult to secure a germ-free condition.

Furthermore, since a structure in which two magnetic bodies are adhered intimately is used, when a liquid which flows is fibrous such as a fruit juice, there is a likelihood that fibers will be bitten between the two magnetic bodies, and there is a problem of easily gathering contamination.

In addition, the opening-closing operation of the valve is performed instantaneously by the snap action. When this valve is used as a filling valve, it is expected that a liquid will be caused to flow in a large flow amount. Accordingly, it is unsatisfactory because there is a fear that a water hammer phenomenon will occur, or it will be difficult to control bubbling.

### Summary of the Invention

The present invention is to solve the above-mentioned problems of the conventional aseptic valves. It is therefore a primary object of the present invention to provide an aseptic filling valve utilizing magnetic coupling, which has a simple structure and an excellent durability and in which a sliding part is closed and contamination of an atmosphere with a leaking operating fluid or a lubricating oil is not caused, the aseptic property is excellent, the operation of opening and closing the valve can be performed assuredly and the opening degree and the flow rate can be easily controlled.

Another object of the present invention is to provide an aseptic filling valve which shows an excellent durability under high-temperature and high-pressure conditions adopted for steam sterilization or hot water sterilization of pipelines of an aseptic filling apparatus and the opening-closing operation can be performed easily and assuredly.

In accordance with the present invention, there is provided an aseptic filling valve as defined in claim 1.

In order to obtain a strong holding force, it is preferred that a magnet having a maximum energy product of at least 80 KJ/m³, for example, a rare earth element-cobalt magnet or a rare earth element-iron magnet, as the permanent magnet.

In order to ensure the valve-sealing property at the valve-closing operation, it is preferred that at the valve-closing operation, after the valve seat is brought into contact with the valve body and the movement of the interior moving member is stopped, the exterior moving member be further moved to shift the normal attracting positional relation between the exterior moving member and the interior moving member and the valve body be pressed to the valve seat by the generated attracting force.

In order to prevent uneven wearing of the valve body and valve seat, it is preferred that a guide such as a screw, a vane or a guide be arranged on the outer side face or end portion of the interior moving member so that the interior moving member is rotated by the movement of a fluid within the tubular member.

### Brief Description of the Drawing

Fig. 1 is a view showing the longitudinal section of one embodiment of the aseptic filling valve of the present invention.

Fig. 2 is a view showing the cross section taken along line A-A in Fig. 1.

Fig. 3 and 4 are side and plane views showing an example of the interior moving member, in which a screw guide is formed.

Fig. 5 and 6 are side and plane view showing another example of the interior moving member, in which a vane guide is formed.

### Detailed Description of the Invention

In the aseptic filling valve of the present invention, a valve seat and an interior moving member having a valve member are arranged within a tubular member acting as a fluid passage, and the operation of opening and closing the valve is effected by moving this interior moving member. The present invention is characterized in that an exterior moving member magnetically coupled with the interior moving member is arranged outside the tubular member, and this exterior moving member is included and enclosed by a sealed wall member to form a pressure chamber defined by the wall member, tubular member and exterior moving member, and an operating fluid is introduced into this pressure chamber, the exterior moving member is moved by the pressure of this fluid and the interior moving member is moved in follow-up with the movement of the exterior moving member to effect the operation of opening and closing the valve.

A magnetic coupling member comprising a permanent magnet, a ferromagnetic member or a combination thereof is disposed in the exterior moving member on the side of the tubular member and in the interior moving member, so that the exterior moving member and the interior moving member are mechanically coupled with each other strongly through the wall of the tubular member. Since the mechanical movement for opening and closing the valve is transmitted through this magnetic coupling, a mechanical sliding part or flexible part for which a sealing property is required is not present between the interior of the tubular member as the fluid passage and the exterior of the tubular member, and the interior and exterior of the tubular member are completely isolated from each other and therefore, the aseptic property is completely maintained in the interior of the tubular member. Moreover, an excellent washability is attained. Furthermore, since a sliding part or flexible part for which a sealing property is required is not present, the durability of the aseptic filling valve is effectively improved.

The exterior moving member is included and enclosed in the closed wall member, and the exterior moving member is driven and linearly moved along the tubular member by applying a fluid pressure to the interior of the pressure chamber defined by the wall member, tubular member and exterior moving member. Since this driving mechanism is arranged in the interior of a space insulated from the exterior by the closed wall member and tubular member, a mechanical sliding part or flexible part for which a sealing property is required is not exposed to the exterior. In general, in order to maintain the aseptic state, an aseptic filling apparatus provided with an aseptic filling valve is placed in a clean room of a clean environment. Special consideration should be taken for equipments used in such an environment so as to maintain the aseptic state. In the aseptic filling valve of the present invention, a movable part exposed to the outside is not present, and therefore, contamination of the environment with a leaking operating fluid or a lubricating oil is not caused, and a high aseptic property is attained.

The operation of opening and closing the valve is carried out in the following manner. When an operating fluid is supplied into the pressure chamber, the fluid pressure is applied to the interior of the pressure chamber and by this pressure, the exterior moving member is moved within the closed wall member along the tubular member. If the exterior moving member is thus moved, the interior moving member magnetically coupled with exterior moving member through the wall of the tubular member is driven in follow-up with the movement of the exterior moving member and is moved within the tubular member along the tubular member. Since the valve body is held in the interior moving member, the valve body is moved by the fluid pressure in the pressure chamber. If the valve body is separated from the valve seat secured in the tubular member, the valve is opened and the fluid flowing in the tubular member flows out. In contrast, if the valve body is brought in contact with the valve seat, the valve is closed and the fluid flowing in the tubular member is stopped. If opening degree of the valve is changed by changing the distance between the valve seat and the valve body, a maximum flow rate is obtained at the full opening where the opening degree 15 largest, and as the opening degree is decreased, the flow rate is reduced. Accordingly, in the aseptic filling valve of the present invention, by adjusting the fluid pressure in the pressure chamber, not only the valve-opening operation but also the valve-closing operation is forcibly accomplished and the operation of opening and closing the valve can be performed more assuredly than in the valve-opening and valve-closing mechanism where the gravity if utilized.

In general, a pair of pressure chambers are arranged above and below the exterior moving member or before and after the exterior moving member, and when the fluid pressure of an operating fluid is applied to the interior of one pressure chamber, the other pressure chamber is released. However, by applying an appropriate fluid pressure to both of the pressure chambers, the operation of opening and closing the valve can be stopped in the midway. Thus, by adjusting the introducing speed of the operating fluid into the fluid chamber and the fluid pressure, the operation of opening and closing the valve can be optionally controlled with ease. Since the flow quantity and flow speed of the fluid to be filled can be optionally changed, there can be attained a control effect of controlling bubbling and engulfing of air at the filling step. A pair of pressure chambers need not always be arranged above and below (or before and after) the exterior moving member, but mechanical means such as a spring can be used instead of one pressure chamber, as is seen in a single acting cylinder.

The exterior moving member and interior moving member are magnetically coupled with each other tightly, and they are arranged at such a positional relation that they are held at energetically stable points of a constructed magnetic circuit. Namely, the interior moving member is linearly driven along the tubular member in follow-up with the movement of the exterior moving member. When the valve is closed, the exterior moving member is moved in the closing direction and the interior moving member is moved in follow-up with the movement of the exterior moving member to support the valve body on the valve seat. However, even after the valve seat falls in contact with the valve body and the movement of the interior moving member is stopped, the exterior moving member is further moved in the same direction by a small distance to shift the normal attracting positional relation between the exterior moving member and the interior moving member, and by the generated magnetic attractive force, the valve body can be pressed to the valve seat. This method is effective for ensuring the sealing property of the valve at the time of closing.

The interior moving member makes a linear movement along the tubular member for opening and closing the valve. If a screw guide, a vane guide or a groove guide is formed on the outer side face or the end portion of the interior moving member so that a rotating force is generated by the movement of the fluid passing through the interior of the tubular member, not only the normal linear movement but also a certain rotational movement can be imparted to the interior moving member, whereby the valve body held in the interior moving member is rotated and the contact portion between the valve body and valve seat is not kept constant bit is perpetually changed. Accordingly, uneven wearing by one-side contact between the valve body and valve seat can be effectively prevented.

The aseptic filling valve of the present invention has a simple structure and a sliding portion for which a sealing property is required is not present in the interior of the tubular member, and therefore, the washability is excellent and the sterilizing operation of pipe-lines to be conducted before the filling operation can be performed easily.

Preferably, a magnet having a maximum energy product of at least 80 KJ/m³, such as a rare earth element-cobalt magnet or a rare earth element-iron magnet, is used as the magnetic material for the magnetic coupling. In case of such a magnet, an effective holding force can be maintained under high-temperature and high-pressure conditions for steam or hot water sterilization. Moreover, the reduction of the magnetic force with the lapse of time is very small. Accordingly, the magnet can be used substantially semipermanently.

Preferred embodiments of the aseptic filling valve of the present invention will now be described with reference to the accompanying drawings.

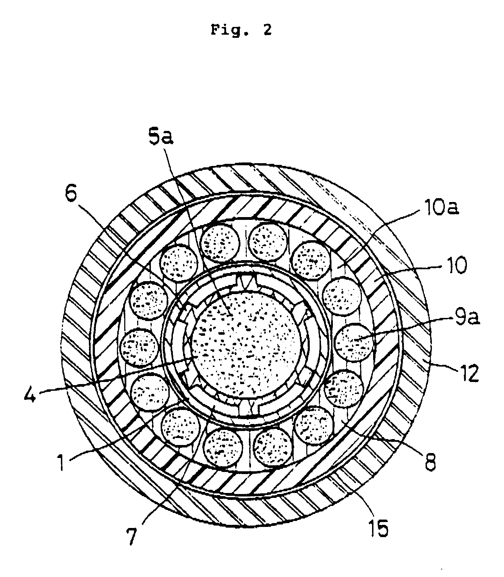

One embodiment of the aseptic filling valve of the present invention is illustrated in Figs. 1 and 2. Fig. 1 is a view showing the longitudinal section and Fig. 2 is a view showing the cross section taken along line A-A in Fig. 1.

In the drawings, reference numeral 1 represents a tubular member, reference numeral 2 represents a valve seat, and reference numeral 4 represents an interior moving member. The interior moving member 4 comprises a valve body 3 disposed at a position confronting the valve seat 2, a magnetic coupling member 5 disposed at a position confronting a coupling member 9 of an exterior moving member through a tubular member wall, and a holding member 6 for holding the foregoing members. The holding member 6 has a star shape having six convex parts on the outer sideface, a streamlined top and the valve body 3 arranged in the bottom portion thereof. The axis of the holding member 6 is in agreement with the axis of the tubular member 1 and the holding member 6 is located above the valve seat 2. The magnetic coupling member 5 comprises a permanent magnet, a ferroelectric member or a combination thereof. In the embodiment shown in the drawings, the magnetic coupling member 5 is a column formed by piling disk-shaped permanent magnets 5a and disk-shaped ferroelectric members 5b alternately, and the axis of this column is in agreement with the axis of the interior moving member 4. The magnetic coupling member 5 may have a shape of a hollow column or other shape.

The holding member 6 is disposed to hold the magnetic coupling member 5 and connect it to the valve body 3, and in order to enhance the magnetic coupling effect, the holding member 6 is composed of a non-magnetic material. By the non-magnetic material referred to herein is meant a substance not showing a magnetic property industrially and practically necessary for attraction and aspiration, and physically, magnetic materials such as a weakly magnetic material, a paramagnetic material and a diamagnetic material are included. According to the shape of the interior moving member, for example, in the case where the valve body proper is composed of a magnetic coupling material, the holding member need not always be disposed. Reference numeral 7 represents a passage for a filled liquid flowing in the tubular member 1. The upstream side of the tubular member 1 is connected to a tube passage for the supply of a filled liquid or the like, and a filling nozzle or the like is connected to the downstream side of the tubular member 1. At least a portion, located between the magnetic coupling members, of the tubular member 1 should be composed of a non-magnetic material. Reference numeral 8 represents an exterior moving member, which has a shape of a thick cylinder annularly surrounding the periphery of the tubular member 1. The axis of the exterior moving member 8 is in agreement with the axis of the tubular member 1. The exterior moving member 1 comprises a magnetic coupling member 9 arranged on the side of the tubular member 1 and a holding member 10 for holding the magnetic coupling member 9. The magnetic coupling member 9 comprises a permanent magnet, a ferromagnetic material or a combination thereof. In the embodiment illustrated in the drawings, the magnetic coupling member 9 is formed by piling disk-shaped permanent magnets 9a and annular ferromagnetic members 9b alternately so that the polarity is adapted for attraction of the magnetic coupling member 5 of the interior moving member. A holding member 10a is used for arranging the permanent magnet 9a at a predetermined position. The holding member 10 and the holding member 10a are composed of a non-magnetic material. According to the shape of the exterior moving member, for example, in the case where the entire exterior moving member is composed of a magnetic coupling material, the holding member need not always be disposed. Reference numeral 11 represents a freely slidable sealing mechanism.

Reference numeral 12 represents a side wall of the closed wall member, and a thick and annular closed chamber 15 is constructed by this side wall 11 and top and bottom walls 13 and 14 of the closed wall member between this side wall and the tubular member 1. The exterior moving member 8 is located within the closed chamber 15, and upper and lower pressure chambers 16 and 17 are formed in upper and lower portions of the exterior moving member 8. The freely slidable sealing mechanism 11 on the inner side and the freely slidable sealing mechanism 11 on the outer side are closely contacted with the tubular member 1 and the side wall 12 of the closed wall member, respectively, so that the exterior moving member 8 can be moved in the vertical direction while keeping air tightness.

Operating fluid passages 18 and 19 communicating with the upper and lower pressure chambers 16 and 17, respectively, are formed on the top wall 13 and bottom wall 14 of the closed wall member, and their exits 20 and 21 are connected to the operating fluid tube passage. Reference numeral 22 represents a sealing mechanism, and each of reference numerals 23 and 24 represents a stopper also acting as a shock absorber.

Known permanent magnets such as Alnico magnet, iron-cobalt-magnet, ferrite magnet, rare earth element-cobalt magnet and rare earth element-iron magnet can be used as the permanent magnet for the magnetic coupling members of the exterior moving member 8 and interior moving member 4. Permanent magnets having a maximum energy product of at least 80 KJ/m³, such as a rare earth element-cobalt magnet represented by samarium-cobalt magnet (SmCo magnet) or a rare earth element-iron magnet represented by neodium-iron magnet (NdFe magnet), have excellent magnetic characteristics and are preferably used in the present invention. Typical properties of samarium-cobalt magnet and neodium-iron magnet are shown in Table 1.

**Table 1**

| | SmCo Magnet | NdFe Magnet |
|---|---|---|
| Constituent element | Sm, Co, Fe, Cu and other additives | Nd, Fe, B and other additives |
| Preparation method | sintering | sintering |
| Magnetic properties | 80-260 KJ/m³ | 190-310 KJ/m³ |

| (BH)max | | |
|---|---|---|
| Br | 0.6-1.2T | 0.9-1.3T |
| Hcj | 420-1600 KA/m | 870-1990 KA/m |
| Reversible permeability | 1.05 | 1.05 |

| Reversible temperature change | | |
|---|---|---|
| Br | -0.03∼-0.04%/K | -0.11~-0.13%/K |
| HoJ | -0.15∼-0.30%/K | -0.55~-0.65%/K |
| Curie temperature | 1000-1120K | 590-600K |
| density | 8.2-8.4 x | 7.3-7.5x10³Kg/m³ 10³Kg/m³ |

| Thermal expansion | | |
|---|---|---|
| C // (273-373K) | 8 x 10⁻⁶/K | 5.2 x 10⁻⁶/K |
| C ⊥ (273-373K) | 11 x 10⁻⁶/K | -0.8 x 10⁻⁶/K |
| Flexural strength | 1.5x10⁸N/m² | 2.4x10⁸N/m² |
| Compression strength | 8x10⁸N/m² | 11x10⁸N/m² |
| Tensile strength | 3.5x10⁷N/m² | 7.4x10⁷N/m² |
| Vicker's hardness | 500-550 | 550-650 |
| Resistivity | 8.6x10⁻⁷Ω·m | 13.0x10⁻⁷Ω·m |
| Crack sensitivity | brittle, easily cracking | hard, not easily cracking |
| Surface rust | relatively rust-proofing | relatively easy to rust |

The neodium-iron magnet has a maximum energy product (BH)max high as 310 KJ/m³ and has higher magnetic performances at normal temperature than the samarium-cobalt magnet, and furthermore, the neodium-iron magnet has a relatively low density and hence, reduction of the weight can be attained. Still further, the neodium-iron magnet has an excellent mechanical strength. The neodium-iron magnet is defective in that the magnet is more easily rusted than the samarium-cobalt magnet, but a rust-proofing effect can be attained by plating or resin coating. The samarium-cobalt magnet is somewhat superior in the magnetic temperature characteristics, but both the magnets are much superior to other magnets such as ferrite magnet. Thus, these permanent magnets have a large maximum energy product of the magnetism and a small temperature coefficient, and therefore, they have excellent magnetic characteristics at high temperatures. Therefore, it is obvious that these permanent magnets can be effectively used for parts for which sterilization with steam or hot water is required, for example, an aseptic filling valve.

Known ferromagnetic materials that can be industrially used, for example, iron, nickel and cobalt, and alloys and compounds composed mainly of these metals, such as carbon steel, chromium steel, chromium molybdenum steel, silicon steel, nickel chromium steel, nickel chromium molybdenum steel, cobalt steel, other steel materials, magnetic materials, e.g., iron-nickel alloy, iron-cobalt alloy, iron-aluminum alloy and nickel-cobalt alloy, and ferrite materials, e.g., ferritic stainless steel and martensitic stainless steel, can be used as the ferromagnetic material for the magnetic coupling members of the exterior moving member 8 and interior moving member 4.

The shapes and structures of the magnetic coupling member 5 of the interior moving member 4 and the magnetic coupling member 9 of the exterior moving member 8 are not limited to those shown in the drawings. For example, the magnetic coupling member can be formed of a single permanent magnet alone, or one of the magnetic coupling members can be formed solely of a ferromagnetic material. The arrangement of the polarities of the magnets is not particularly critical, and permanent magnets can be arranged discretely along the circumferential direction in the tube. In each case, however, it is indispensable that magnetic coupling sufficient to open and close the valve easily and assuredly should be maintained between the magnetic coupling member 5 and the magnetic coupling member 9. In connection with the example of the construction of the magnetic coupling members shown in Figs. 1 and 2, the manner of the magnetic coupling is indicated by magnetic poles N and S and magnetic force lines (arrow lines) in Fig. 1.

Known non-magnetic materials that can be industrially used, for example, metallic materials such as austenitic stainless steel, aluminum, aluminum alloys, titanium, titanium alloys, copper and brass, and plastics, ceramics, rubbers and resins not showing the magnetic properties, can be used as the non-magnetic material for the holding members for the exterior moving member and interior moving member 4 and the part of the tubular member 1 held between the magnetic couplings.

The interior moving member 4 includes the valve body and should have such a shape that magnetic coupling should be produce with the exterior moving member and should form a passage 7 for the fluid within the tubular member 1 and should not inhibit flowing of the fluid. As shown in Fig. 2, in the present embodiment, the interior moving member has six convex parts on the outer circumferential side face, and by the contact of these projecting parts with the inner side face of the tubular member 1, the interior moving member 4 is guided so that the axis of the valve body 3 is in agreement with the axis of the valve seat 2. The fluid flowing in the tubular member, such as a liquid to be filled, is allowed to pass through a sufficient space between the interior moving member 4 and the tubular member 1, and is guided to the valve portion without inhibition and flows downstream through the valve seat 2. Fig. 1 shows the longitudinal section cut at the position of this concave part. Incidentally, it is sufficient if the fitting between the inner side face of the tubular member 1 and the peripheral edge of the convex part of the interior moving member 4 is very loose, and the fitting degree is set so that washing is possible between the fitting faces. The shape of the interior moving member is not limited to that of the present embodiment. For example, there can be adopted such a hollow cylindrical shape that the flowing path is once formed in the axis and is extended to the periphery just above the valve body. Furthermore, various shapes such as a shape of a square pillar and a spherical shape can be adopted.

In the embodiment shown in Fig. 1, the upper top end portion of the interior moving member has a streamlined shape, but the shape of the upper top end portion is not particularly critical, though a shape ensuring smooth flow of the fluid is preferable. If a spiral shape is given to the above-mentioned convex parts or a fluid guide such as a screw, a vane or a groove is formed on the outer side face or end portion of the interior moving member 4 so that a rotating power is produced by the movement of the fluid passing through the interior of the tubular member 1, a certain rotational movement with the axis being as the center of rotation can be given to the interior moving member 4 while the valve is opened. By this rotation, the position of the contact between the valve seat 2 and the valve body 3 during the closing of the valve can be shifted little by little, and therefore, uneven wearing of the contact faces is not caused even if the valve is used for a long time.

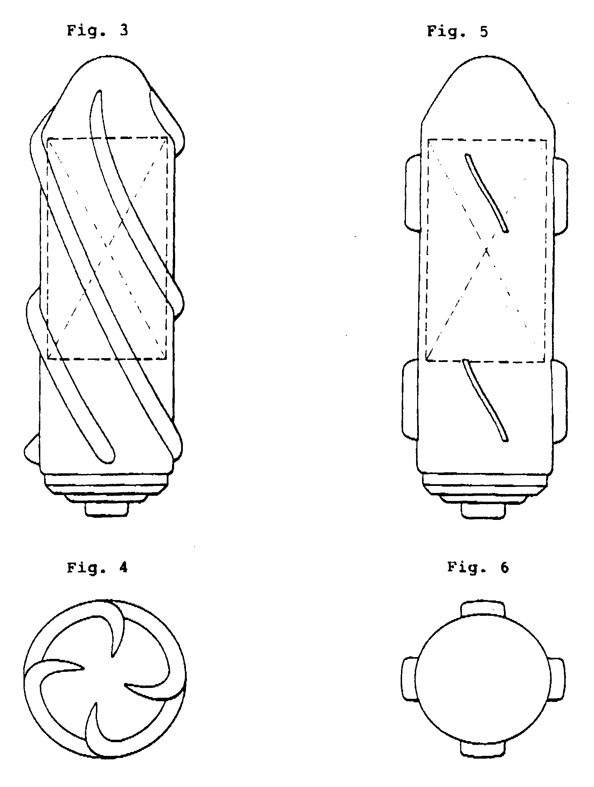

Figs. 3 and 4 illustrate one example of the interior moving member in which a screw guide is disposed, and Fig. 3 shows the side face and Fig. 4 shows the plane. In the drawings, reference numeral 25 represents a screw guide.

Figs. 5 and 6 illustrate another example of the interior moving member in which a vane guide is disposed. Fig. 5 shows the side face and Fig. 6 shows the plane, and in the drawings, reference numeral 26 represents a vane guide.

In the embodiment of the aseptic filling valve of the present invention shown in Figs. 1 and 2, the valve is opened and closed in the following manner.

Opening and closing of the valve are accomplished by moving the exterior moving member 8 in the vertical direction and by moving the interior moving member 4 in the vertical direction in follow-up with the movement of the exterior moving member 8.

The vertical movement of the exterior moving member 8 is accomplished by applying a fluid pressure to the upper pressure chamber 16 or the lower pressure chamber 17. As the operating fluid, there can be used air (including sterilized air), water (including sterilized water), steam, oil and the like as the operating fluid.

If the fluid pressure is applied to the upper pressure chamber 16 to increase the pressure in the upper pressure chamber 16 over the pressure in the lower pressure chamber 17, the exterior moving member 8 is moved downward in the closed chamber 15. The interior moving member 4 is driven by the magnetic coupling force between the magnetic coupling member 9 of the exterior moving member, and the magnetic coupling member 5 of the interior moving member and is moved downward together with the exterior moving member 8, and the interior moving member 4 is stopped at the position where the valve body 3 is closely contacted with the valve seat 4. Fig. 1 is a sectional view showing the positional relation just at this moment. Thus, the valve is closed and the flow of the fluid in the tubular member 1 is stopped. When the movement of the interior moving member 4 is stopped, the exterior moving member 8 does not impinge against the stopper 24 as yet but is further moved by a very small distance. When the interior moving member 4 is further dropped to the point of the lower stopper 24, the movement of the interior moving member 4 is stopped. Since the magnetic coupling member 9 of the exterior moving member continues to attract the magnetic coupling member 5 of the interior moving member, the interior moving member 4 undergoes a downward force, and the valve body 3 is tightly pressed to the valve seat 2. When the valve is opened to cause the fluid to flow, a fluid pressure is applied to the lower pressure chamber 17 to increase the pressure in the lower pressure chamber 17 over the pressure in the upper pressure chamber 16, and the exterior moving member 8 is moved upward by this pressure difference and the interior moving member 4 is together moved to separate the valve body 3 from the valve seat 2 and open the valve, whereby the fluid is caused to flow. When the top end of the exterior moving member 8 falls in contact with the upper stopper 23, the exterior moving member 8 is not allowed to further move, and also the interior moving member 4 is stopped and the valve is fully opened to attain a maximum flow of the fluid. If the speed of feeding the operating fluid into the upper pressure chamber 16 or the lower pressure chamber 17 is increased, the opening and closing speed of the valve is increased, and if the feed speed is reduced, the opening and closing speed of the valve is reduced. By thus controlling the feed speed of the operating fluid into the pressure chamber, the opening and closing speed of the valve can be easily controlled. If the feeding of the operating fluid into the pressure chamber is stopped in the midway to the full-open or full-closed state of the valve and the difference between the pressure in the upper pressure chamber 16 and the pressure in the lower pressure chamber 17 is eliminated, the exterior moving member is immediately stopped together with the interior moving member 4. Accordingly, the open-closed state of the valve can be controlled easily and assuredly, and therefore, the flow rate of the liquid can be adjusted easily and assuredly. The vertical movement of the exterior moving member 8 can be optionally effected and stopped between the upper stopper 23 and the lower stopper 24 with ease. Moreover, opening or closing of the valve can be detected by attaching a magnetic sensor such as a lead switch on the outer side face of the closed wall member 12, though this feature is not illustrated in the drawings.

The fluid does not always flow downwardly in the interior of the aseptic filling valve of the present invention. The filling valve can be used in such a manner that the fluid flows upwardly from the lower portion toward the upper portion. In this case, the filling valve is attached to the filling apparatus in a manner reverse to the manner shown in the drawings. Moreover, there can be adopted a modification in which the filling valve is transversely attached and the pipe path is orthogonally bent at a rear part.

If the aseptic filling valve of the present invention having the above-mentioned structure is adopted, the following excellent effects can be attained.

The valve portion is arranged in the closed tubular member and has a simple and tough structure which is hardly worn or fatigued, and therefore, an excellent durability is attained. Moreover, the aseptic characteristic-maintaining property is excellent and washing and sterilization can be easily accomplished.

By magnetically coupling the exterior moving member with the interior moving member, the interior moving member can be moved in follow-up with the movement of the exterior moving member to move the valve body held by the interior moving member for opening and closing the valve. Accordingly, the operation of opening and closing the valve can be performed easily and assuredly, and the opening and closing speed, the opening or closing degree, the maintenance of the opening or closing degree and the flow rate of the fluid can be controlled easily and assuredly.

The aseptic filling valve of the present invention is excellent over other valves using a steam barrier or a diaphragm in that the property of retaining the quality of the filled liquid and the durability are much better and the aseptic property is higher. Furthermore, in the structure of the present invention, since any sliding part is not exposed to the outside, the atmosphere is not contaminated with a leaking operating fluid or a lubricating oil, and the aseptic characteristic is further enhanced.

Moreover, in the filling valve of the present invention, the opening and closing operation can be performed more assuredly than in the conventional opening-closing mechanism using a magnet and utilizing the weight of the valve body, and the flow rate of the liquid can be adjusted by controlling the opening or closing degree of the valve easily and assuredly.

Since the above-mentioned excellent effects can be attained by the aseptic filling valve of the present invention, the filling valve of the present invention can be effectively used as an aseptic filling valve for filling liquids in various fields where a high aseptic characteristic is required, for example, in the fields of the food industry and pharmaceutical industry. Moreover, in the fields of the electronic industry and the biochemical industry, the filling valve of the present invention can be valuably used as a fluid control valve to be used within a clean room. Still further, the filling valve of the present invention can be widely used in embodiments where a strict sealing property and an explosion-proof characteristic are required.

## Claims

1. An aseptic filling valve comprising a valve seat (2) arranged within a tubular member (1), an interior moving member (4), arranged in the tubular member and having a valve body (3), an exterior moving member (8) arranged outside the tubular member and magnetically coupled with the interior moving member, characterized by a wall member including the exterior moving member therein and a pressure chamber defined by said wall member, tubular member and exterior moving member, wherein the exterior moving member (8) is moved by applying a fluid pressure to the interior of the pressure chamber and the interior moving member (4) is moved in follow-up with the movement of the exterior moving member to effect the operation of opening and closing the valve, wherein the interior moving member is provided with the magnetic coupling member (5) composed of a permanent magnet and/or a ferromagnetic material, wherein the exterior moving member is provided with a magnetic coupling member (9) composed of a permanent magnet and/or a ferromagnetic material and wherein the exterior moving member (8) moves following volume changes of the pressure chamber by the pressure applied to the pressure chamber and along the tubular member and the wall member while maintaining air-tightness, and wherein the exterior moving member (8) and the interior moving member (4) perform a linear movement along a part of the tubular member.

2. An aseptic filling valve as set forth in claim 1,
**characterized** in that
at the time of closing the valve, the valve body (3) is pressed to the valve seat (2) by an attracting force produced by magnetic coupling of the interior moving member (4) with the exterior moving member (8).

3. An aseptic filling valve as set forth in claim 1,
**characterized** in that
a screw guide (Fig. 3 and 4), a vane guide (Fig. 5 and 6) or a groove guide is formed on the outer side face or end portion of the interior moving member (4), and that the interior member (4) is rotated by the movement of the fluid within the tubular member.

4. An aseptic filling valve as set forth in claim 1,
**characterized** in that
the maximum energy product of the used permanent magnet is at least 80 KJ/m³.

## Patentansprüche

1. Aseptisches Füllventil mit einem Ventilsitz (2), der innerhalb eines Rohrteiles (1) angeordnet ist, einem inneren beweglichen Teil (4), das in dem Rohrteil angeordnet ist und einen Ventilkörper (3) aufweist, und einem äußeren beweglichen Teil (8), das außerhalb des Rohrteiles angeordnet und mit dem inneren beweglichen Teil magnetisch gekoppelt ist,
**gekennzeichnet durch**
ein Wandteil, das das äußere bewegliche Teil in sich beinhaltet, und eine Druckkammer, die von dem Wandteil, dem Rohrteil und dem äußeren beweglichen Teil gebildet wird, wobei das äußere bewegliche Teil (8) durch Beaufschlagen des Inneren der Druckkammer mit einem Fluiddruck bewegt wird und sich das innere bewegliche Teil (4) im Nachlauf hinsichtlich der Bewegung des äußeren beweglichen Teiles bewegt, um die Öffnungs- und Schließoperation des Ventiles zu bewirken, wobei das innere bewegliche Teil mit einem magnetischen Kupplungsteil (5) versehen ist, das aus einem Permanentmagneten und/oder einem ferromagnetischen Material besteht, und wobei das äußere bewegliche Teil mit einem magnetischen Kupplungsteil (9) versehen ist, das aus einem Permanentmagneten und/oder einem ferromagnetischen Material besteht, und wobei sich das äußere bewegliche Teil (8) den Volumenänderungen der Druckkammer folgend, die durch den auf die Druckkammer aufgebrachten Druck erzeugt werden, sowie entlang dem Rohrteil und dem Wandteil bewegt, während die Luftundurchlässiglkeit erhalten bleibt, und wobei das äußere bewegliche Teil (8) und das innere bewegliche Teil (4) eine lineare Bewegung entlang einem Teil des Rohrteiles ausüben.

2. Aseptisches Füllventil nach Anspruch 1,
**dadurch gekennzeichnet, daß**
zum Zeitpunkt des Schließens des Ventiles der Ventilkörper (3) durch eine Anziehungskraft an den Ventilsitz (2) gepreßt wird, die durch die magnetische Kopplung des inneren beweglichen Teiles (4) mit dem äußeren beweglichen Teil (8) erzeugt wird.

3. Aseptisches Füllventil nach Anspruch 1,
**dadurch gekennzeichnet, daß**
eine Schraubenführung (Fig. 3 und 4), eine Flügelführung (Fig. 5 und 6) oder eine Nutführung an der äußeren Seitenfläche oder an dem Endteil des inneren beweglichen Teiles (4) ausgebildet ist, und daß das innere Teil (4) durch die Bewegung des Fluides innerhalb des Rohrteiles gedreht wird.

4. Aseptisches Füllventil nach Anspruch 1,
**dadurch gekennzeichnet, daß**
das maximale Energieprodukt des verwendeten Permanentmagneten wenigstens 80 kJ/m³ beträgt.

## Revendications

1. Valve de remplissage aseptique comprenant un siège de valve (2) disposé à l'intérieur d'un organe tubulaire (1), un organe mobile interne (4), plaçé dans l'organe tubulaire et possédant un corps de valve (3), un organe mobile externe (8) placé à l'extérieur de l'organe tubulaire et couplé magnétiquement avec l'organe mobile interne, caractérisé par un organe formant paroi à l'intérieur duquel est placé l'organe mobile externe, et une chambre de compression délimitée par ledit organe formant paroi, l'organe tubulaire et l'organe mobile externe, l'organe mobile externe (8) étant déplacé par l'application d'une pression hydraulique à l'intérieur de la chambre de compression et l'organe mobile interne (4) étant déplacé en suivant le mouvement de l'organe mobile externe de manière à assurer l'opération d'ouverture et de fermeture de la valve, l'organe mobile interne étant muni d'un organe d'accouplement magnétique (5) qui comprend un aimant permanent et/ou un matériau ferromagnétique, l'organe mobile externe étant muni d'un organe d'accouplement magnétique (9) qui comprend un aimant permanent et/ou un matériau ferro-magnétique, et l'organe mobile externe (8) étant mobile en suivant les variations du volume de la chambre de compression sous l'action de la pression appliquée à la chambre de compression et le long de l'organe tubulaire et de la paroi tout en maintenant une étanchéité à l'air, et l'organe mobile externe (8) et l'organe mobile interne (4) réalisant un mouvement linéaire le long d'une partie de l'organe tubulaire.

2. Valve de remplissage aseptique selon la revendication 1, caractérisée en ce qu'au moment de la fermeture de la valve, le corps de valve (3) est appliqué contre le siège de valve (2) par une force d'attraction produite par l'accouplement magnétique de l'organe mobile interne (4) avec l'organe mobile externe (8).

3. Valve de remplissage aseptique selon la revendication 1, caractérisée en ce qu'un guide à vis sans fin (figures 3 et 4), un guide à pales (figures 5 et 6) ou un guide à rainures est formé sur la face latérale externe ou sur la partie d'extrémité de l'organe mobile interne (4), et en ce que l'organe mobile interne (4) est mis en rotation par mouvement du fluide à l'intérieur de l'organe tubulaire.

4. Valve de remplissage aseptique selon la revendication 1, caractérisée en ce que la production d'énergie maximale de l'aimant permanent utilisé est d'au moins 80 KJ/m3.
